(19) Europäisches Patentamt
European Patent Office
Office européen des brevets

(11) Publication number : **0 657 550 A1**

# (12) EUROPEAN PATENT APPLICATION

(21) Application number : **94308617.3**

(51) Int. Cl.[6] : **C21B 13/14**

(22) Date of filing : **22.11.94**

(30) Priority : **13.12.93 GB 9325418**

(43) Date of publication of application :
**14.06.95 Bulletin 95/24**

(84) Designated Contracting States :
**AT BE DE ES FR GB IT NL SE**

(71) Applicant : **The BOC Group plc**
**Chertsey Road**
**Windlesham Surrey GU20 6HJ (GB)**

(72) Inventor : **Satchell, Donald Prentice, Jr.**
**10 Lavina Court**
**Summit, New Jersey 00901 (US)**

(74) Representative : **Wickham, Michael et al**
**c/o Patent and Trademark Department**
**The BOC Group plc**
**Chertsey Road**
**Windlesham Surrey GU20 6HJ (GB)**

## (54) Method and apparatus for producing iron.

(57) Iron ore is reduced by reaction with reducing gas in a furnace 2. The iron is melted and a solid carbonaceous material is gasified both in a melter-gasifier 4. The gasification of the carbonaceous material yields a reducing gas for use in the furnace 2. At least 25% by weight and preferably all of the carbonaceous material comprises coal char formed by the partial oxidation of coal in a separate reactor 6.

FIG.1

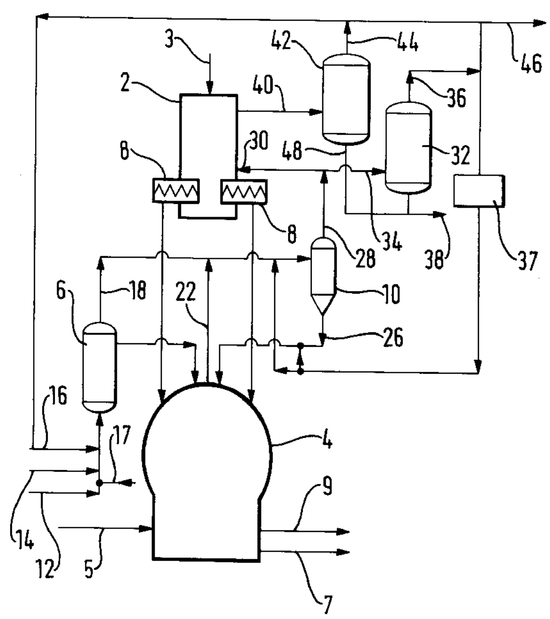




Jouve, 18, rue Saint-Denis, 75001 PARIS

This invention relates to a method and apparatus for producing iron.

Most of the world's iron is made in blast furnaces. The primary function of a blast furnace is to reduce iron ore to iron. The charge comprising iron ore, coke and fluxing ingredients is introduced into the furnace through its top and forms the bed. A blast of pre-heated air is used to burn coke to form carbon monoxide. The carbon monoxide reduces the iron ore to iron. The liberated by the combustion of the coke is used to melt the iron produced. Iron and slag are removed as molten products at the bottom of the furnace.

One disadvantage of the above-described process is that it is necessary first to convert coal to coke. This operation is performed in a coke oven in a reducing atmosphere. Coke ovens are both expensive to run and produce residues which present problems when it comes to their disposal in an environmentally acceptable manner.

It has therefore been proposed to produce iron from iron ore using coal directly. A two stage furnace is typically used. In an upper stage iron ore is reduced to iron by reaction with a reducing gas. The resulting iron is sent to a second stage in which it is melted. The second stage also serves to gasify coal via partial oxidation reactions so as to yield a reducing gas for use in the first stage. Such direct reduction processes are now coming into commercial use.

In order to generate the necessary high temperatures to ensure the iron formed in the first stage is melted in the second stage commercially pure oxygen or oxygen-enriched air is used as the source of the oxygen for conversion of the coal to the reducing gas. Even so, some coals with high volatile contents are unsuitable for use in direct reduction processes since adequate temperatures cannot be generated with them in the second stage. Moreover, even with coals which are of lower volatile content and which are therefore suitable for use in the direct reduction process, the oxygen demand can be high.

It is an aim of the present invention to produce a method for the direction reduction of iron ore which has an improved thermal efficiency in comparison with the direct reduction process described above. The improved thermal efficiency may for example be exploited by using a coal having a relatively high proportions of volatile components or in a reduction in the consumption of coal and/or oxygen.

According to the present invention there is provided a method for producing iron, comprising the steps of reducing iron ore to iron by reaction of a reducing gas in a first stage and melting the iron and gasifying a solid carbonaceous material both in a second stage, the gasification of the solid carbonaceous material yielding a reducing gas for use in the first stage, characterised in that at least 25 percent by weight, more preferably at least 75% by weight, and most preferably all of the carbonaceous material comprises particulate coal char formed by the partial oxidation of coal in a reactor separate from the first and second stages.

The invention also provides apparatus for producing iron, comprising a first furnace stage for reducing iron ore to iron by reaction of a reducing gas, a second furnace stage for melting the iron and gasifying a solid carbonaceous material so as to form the reducing gas, characterised in that the apparatus additionally includes a reactor separate from the first and second stages for partially oxidising particulate coal to form a coal char, and means for feeding the coal char to said second furnace stage, wherein the reactor is adapted to supply at least 25 percent by weight and preferably all of the solid carbonaceous material to the second furnace stage.

In a conventional two stage process for the reduction of iron ore, all the coal is fed directly to the second or melting/gasification stage of the process. This stage is typically operated with a gasification temperature in the range of 1000 to 1300°C and a melting temperature in the range of 1600 to 1700°C. A reducing gas is produced in the second stage and is employed in the first stage to reduce the iron oxide. The reducing gas is typically cooled to a temperature below 1000°C intermediate the first and second stages. The reactions that take place in the second stage include the devolatilisation of coal. This reaction can take place at a temperature well below 1000°C. Thermal energy is thus wasted in the conventional two stage process by devolatilising coal, heating the products of the devolatilisation to a temperature of between 1000 to 1700°C and then cooling them again to below 1000°C. The method and apparatus according to the invention make it possible to operate at improved thermal efficiency by devolatilising at least 25% by weight of the coal in the reactor in which a temperature substantially lower than that of the second stage is able to be maintained. As a result reductions can be made in the coal and oxygen consumption of the overall method (in comparison with conventional process). Clearly, the greater the proportion of the incoming coal that is fed to the reactor in preference to the second stage, the greater the economies in coal and oxygen consumption. It is for this reason that we prefer at steady state operation to feed all the coal to the reactor in the method according to the invention. Another advantage offered by the method and apparatus according to the invention is that it makes possible the attainment of a decreased degree of coal fragmentation in comparison with conventional practice and hence a reduction in the rate at which fine particles of coal are formed (at least in part by reducing the thermal shock to which the coal particles are subjected). Fine particles adversely affect the performance of the first stage and also the quality of the iron if a packed carbon bed is employed at the bottom of the second stage. In addition reduced formation of fine particles decreases the load on any system associated with the second stage.

The particulate coal may be partially oxidised in the reactor at a temperature in the range of 400 to 1200°C. The extremes of this range are not preferred: the partial oxidation temperature is preferably in the range of 500 to 1000°C.

Air, oxygen-enriched air, or oxygen may be supplied to the reactor so as to take part in the partial oxidation of the coal. The partial oxidation of the coal in the reactor produces a calorific gas. The calorific gas may be used as a reactant in the first stage of the method according to the invention. Alternatively, it may be exported for use outside the first stage. If the calorific gas is used as a reactant in the first stage, oxygen is desirably supplied to the reactor, in preference to oxygen-enriched air and air, in order to take part in the partial oxidation of the coal. If the calorific gas is exported, there is typically a greater freedom in selecting the operating conditions for the reactor. For some uses of the exported calorific gas it is desirable to use air in preference to oxygen as a reactant in the partial oxidation of the coal. As a result, the total rate of (pure) oxygen consumption in the method according to the invention can be further reduced.

The exported calorific gas may, for example, be used as a feed gas to a plant for the direct reduction of iron ore or in the raising of steam or generation of electricity. In some examples of the use of the exported calorific gas, it is possible to burn it so as to form hot combustion gases, to expand the hot combustion gases in a turbine with the performance of external work, the external work including the driving of a compressor that feeds air to the reactor.

If desired, an effluent gas from the first stage of the method according to the invention may be passed to the reactor. This step may be used to control the carbon conversion and temperature in the reactor. In general, however, since the effluent gas is of reducing character, coal and oxygen feed rates to the reactor tend to need to be increased with increasing rate of recycle of the effluent gas to the reactor. It is therefore preferred to pass less than 20% by weight of the effluent gas from the first stage to the reactor.

If desired, steam may be introduced into the reactor so as to prevent or inhibit the formation of soot.

If the calorific gas produced in the first reactor is to be exported for use outside the first stage, an oxide or carbonate of an alkali metal or an alkaline earth is preferably fed to the reactor so as to convert to the corresponding alkali metal sulphide or alkaline earth sulphide, hydrogen sulphide formed during the partial oxidation of the coal. Preferably, calcium oxide (lime) is used for this purpose.

If the calorific gas produced in the reactor is to be used as a reactant in the first stage, it is preferably mixed at a region intermediate the first and second stages with at least part of the reducing gas formed in the second stage. If desired the calorific gas may be pre-cooled, for example, by water or steam. Some particulate material is preferably separated from the mixture of the calorific gas and the reducing gas, for example, in a cyclone preferably operating at a temperature in the range of 800 to 900°C. One part of the resulting gas mixture is preferably sent directly to the first stage as the reducing gas and another part is preferably quenched by direct contact with water to remove further particulates and at least part of it recycled to upstream of the cyclone. If desired, water vapour may be separated from the gas mixture in a condenser intermediate the quenching region and the cyclone.

The partial oxidation of the particulate coal is preferably performed in a fluidised bed. The fluidised bed may have a uniform gas velocity therethrough. Preferably, however, the fluidised bed is of the crater or spouted bed kind or is otherwise provided with one or more regions of circulation.

The particulate coal char is preferably fed hot (e.g. at a temperature of above 400°C) and preferably continuously to the second stage. A screw feeder or a pressurised gas may be used continuously to feed the particulate coal char from the reactor to the first furnace stage. The feeding of the coal char is preferably conducted so as to minimise its residence time outside one or other of the reactor and the second stage and thereby to minimise loss of temperature while it is between the reactor and the second stage.

The method and apparatus according to the invention will now be described by way of example with reference to the accompanying drawings in which:

Figure 1 is a simplified schematic flow diagram of a first plant for making iron from iron ore; and

Figure 2 is a simplified schematic process flow diagram of a second plant for making iron from iron ore.

Referring to Figure 1 of the drawings, there is shown a two stage furnace for operating the COREX process. The furnace comprises an upper vertical shaft furnace 2 which forms the first stage of the method according to the invention and a lower melter-gasifier 4 which forms the second stage of the method according to the invention. In brief, operation of the shaft furnace 2 and the melter-gasifier 4 is conducted in the following manner. Measured quantities of lump, pelletised or sinter iron oxide ore, lime and dolomite are charged at directly into the top of the furnace 2 through an inlet 3. Simultaneously a reduction gas at elevated temperature comprising carbon monoxide and hydrogen is blown into the furnace 2 at an intermediate region thereof. The reduction gas moves upwards against a descending flow of ore to the top of the furnace 4 where it drawn off. While descending through the hot gas, lime and dolomite are calcined and the ore is reduced to sponge iron. Screw conveyors 8 are employed to extract the sponge iron from the bottom of the shaft furnace 4 at a desired

rate and the extracted sponge iron is allowed to fall under gravity directly into the gasifier-melter 4. The gasifier-melter 4 is of a kind having a hearth (not shown) at its bottom, a packed bed of coal char (not shown), a fluidised bed (not shown) above the packed bed, and an uppermost freeboard zone. Oxygen or oxygen-enriched air is blown from a conduit 5 through tuyeres (not shown) into the fluidised bed region of the gasifier-melter 4, and the coal is thereby gasified. The resulting reducing gas is withdrawn, is passed through a cyclone 10 in order to separate particulates therefrom as is divided. Part of the divided flow provides the reducing gas for the main furnace. Sponge iron falling under gravity into the fluidised bed region of the gasifier-melter 4 from the furnace 2 is melted. Liquid iron and slag, the latter comprising coal ash, lime and dolomite, drop into the hearth and separate naturally into two layers owing to the difference in density between the heavier iron and the lighter slag. Liquid iron is thus withdrawn from the bottom of the gasifier-melter 4 through an outlet 7 and liquid slag through an outlet 9.

In accordance with the invention, all the coal employed in the gasifier-melter 4 is converted into a char in an upstream reactor 6.

In operation of the illustrated plant in accordance with the invention, particulate coal, commercially pure oxygen and recycled reducing gas are introduced into the reactor 6. The particulate coal, typically having an average particle size in the range of 12 to 50mm, and typically being formed by a conventional coarse coal grinding method, is fed into the reactor 6 through an inlet 12. The coal may be conveyed to the inlet 12 by any conventional means, typically involving pneumatic transfer in a neutral or reducing atmosphere or even in air. The coal is mixed in the reactor 6 with a flow of oxygen supplied through an inlet 14. It is not necessary that the oxygen stream be pure. Preferably, however, it has an oxygen mole fraction of at least 0.85. The coal is also mixed in the reactor 6 with a stream of reducing gas consisting essentially of carbon monoxide, carbon dioxide and water vapour which is introduced into the reactor 6 through an inlet 16. If desired, additional steam may be added through the inlet 17 in order to prevent soot from being formed in the reactor 6. The reactor 6 is maintained at such a temperature, preferably in the range of 600 to 1000°C, and the relative rates of admission to the reactor 6 of the coal, oxygen and reducing gas are so selected that a partial oxidation of the coal takes place. A number of different chemical reactions take place in the reactor 6. The main reactions include the evolution of volatile hydrocarbons; the oxidation of solid carbon to carbon dioxide; the oxidation of volatilised hydrocarbons to carbon dioxide and water vapour; the reduction of carbon dioxide by carbon to carbon monoxide, and the reaction of water vapour with carbon to form carbon monoxide and hydrogen. In addition, a reversible reaction between carbon monoxide and water vapour to form carbon dioxide and hydrogen also takes place. These reactions are represented by the following equations:

$$C\ (solid) + O_2 \rightarrow CO_2$$

$$Cn\ Hy\ (solid) \rightarrow Cn\ Hy\ (gas)$$

$$Cn\ Hy\ (gas) + \frac{(4n + y)}{2} O_2 \rightarrow nCO_2 + \frac{y}{2} H_2O$$

$$CO_2 + C \rightarrow 2CO$$

$$C + H_2O \rightarrow CO + H_2$$

$$CO + H_2O \rightleftarrows CO_2 + H_2$$

The reactions in which elemental carbon participates proceed much more slowly than the other reactions. Predominant reactions are the evolution of hydrocarbons and the oxidation of these hydrocarbons to produce hydrogen, carbon monoxide and carbon dioxide. Small amounts of various gaseous impurities such as hydrogen sulphide and ammonia may also be formed. A typical composition on a dry basis is as follows:

TABLE

| Components | Percent by volume |
|---|---|
| $H_2$ | 31.8 |
| CO | 63.0 |
| $CO_2$ | 0.5 |
| $N_2$ | 3.7 |

| | |
|---|---|
| $NH_3$ | 1.0 |

The composition of this stream is not critical.

The reactor 6 may take any one of a number of different forms. Preferably, the partial oxidation of the incoming coal is performed in a bed. Typically, gaseous products of the partial oxidation flowing out of the bed elutriate the finest particles of resulting char. Such particles typically have sizes less than 0.1 mm. (As shall be described below these particles are kept from the reduction shaft furnace.) A residual fraction of relatively coarse particles of coal char is thus left in the bed and may be withdrawn therefrom preferably continuously.

The bed of particulate char formed in the reactor 6 is preferably a fluidised bed. The reactor 6 is preferably shaped so as to encourage a relatively short residence time of char in the bed to keep to a minimum the amount of gasification of the char itself that occurs in the reactor 6. The fluidised bed preferably has an expansion of only 10 to 40% of the unfluidised bed volume, and may be of the spouted bed or crater bed kind or otherwise provide for recirculation of gas and particles within the bed.

A stream of calorific gas is withdrawn from the top of the reactor 6 through an outlet 18 at a temperature of approximately 750°C is mixed with two further gas streams. The first of these gas streams is a reducing gas stream which leaves the top of the melter-gasifier 4 through an outlet 22. The reducing gas stream consists essentially of carbon monoxide and hydrogen and contains small proportions of carbon dioxide, ammonia, nitrogen and hydrogen sulphide. The reducing gas stream is also heavily laden with particulates and typically leaves the melter-gasifier 4 at a temperature typically in the range of 1000 to 1300°C. In order to prepare such gas for use as a reducing agent in the shaft furnace 2, it is necessary first to free the gas of most or all of its particulates. The removal of particulates from the reducing gas is performed in the cyclone 10, preferably at a temperature in the range 800 to 900°C. Mixing the reducing gas from the melter-gasifier 4 with the calorific gas helps to reduce the temperature of the reducing gas. Its temperature is, however, primarily reduced by mixing it with a quench gas whose formation is described below. A gas mixture consisting essentially of carbon monoxide and hydrogen enters the cyclone 10 at a temperature in the range of 800 to 900°C through an inlet 24. Particulate material is extracted from the gas mixture in the cyclone 10 and the resulting particulates are fed back to the top of the melter-gasifier via a conduit 26. A reducing gas stream essentially free of particulates leaves the cyclone 10 through an outlet 28 and is divided into two parts. One part is introduced into the reduction shaft furnace 2 through an inlet 30 and reduces the iron oxide to iron as previously described. The remainder of the reducing gas passes into a quenching tower 32 through an inlet 34. This part of the reducing gas is quenched by direct contact with water in the tower 32. The quenched part of the reducing gas leaves the tower 32 through an outlet 36 at its top. The gas flows through a condenser 37 which is effective to separate by condensation water vapour from the quenched gas. A part of the resulting gas mixture, depleted in water vapour, forms the quench gas that is mixed with the hot reducing gas intermediate the outlet 22 from the melter-gasifier 4 and the cyclone 10. The remainder of the gas mixture from the condenser 37 is used to transport fine particles from the cyclone 10 to the melter-gasifier 4. Water is discharged from the bottom of the scrubber 32 through an outlet 38.

As described above, the reducing gas entering the furnace 2 through the inlet 30 reduces iron ore therein to sponge iron. Reaction between hydrogen and iron oxides results in the formation of water vapour and reaction between carbon monoxide and iron oxide results in the formation of carbon dioxide. Accordingly, hot gas leaving the reduction shaft furnace 2 through an outlet 40 at its top is typically richer in carbon dioxide and water vapour than the corresponding gas entering the furnace through the inlet 30. The hot gas typically leaves the furnace 2 through the outlet 40 at a temperature in the range of 300 to 350°C. It is cooled in a second scrubber 42 by contact with water. The scrubber 42 also serves to remove particulates from the gas leaving the reducing furnace 2. Resulting scrubbed gas at a temperature in the order of 130°C leaves the top of the scrubber 42 through an outlet 44. Water vapour is typically removed from this gas by condensation in a condenser (not shown). One part of the resulting gas depleted in water vapour is exported from the plant shown in the drawing through an outlet 46 and may be used as a fuel gas. The other part forms the reducing gas introduced into the reactor 6 through the inlet 16. An aqueous slurry of particulates is discharged from the bottom of the scrubber 42 through an outlet 48 and is mixed with water discharged from the bottom of the quench tower.

A number of advantages are offered by the process and apparatus described hereinabove with reference to Figure 1 over a conventional Corex process. First, overall rates of coal consumption can be substantially reduced. Second, the overall consumption of commercially pure oxygen is also reduced. Third, it is believed that the amount of coal fragmentation that occurs in the melter-gasifier 4 is decreased, thus decreasing the dust load on the apparatus and increasing the particle size of the char bed in the melter-gasifier 4, thereby

giving the operating advantages described above.

Referring now to Figure 2, the apparatus shown therein and its operation is substantially the same as the apparatus shown in Figure 1 and its operation, save for two differences. The first difference is that the calorific gas evolved from the reactor 6 exported from the apparatus shown in Figure 2 and not mixed with the reducing gas intermediate the melter-gasifier 4 and the furnace 2 (cf the apparatus shown in Figure 1). The second difference is that the feed from the inlet 14 to the char reactor 6 can, if desired, in operation of the apparatus shown in Figure 2 be air or oxygen-enriched air instead of oxygen (cf operation of the apparatus shown in Figure 1). The advantages outlined above with reference to Figure 1 can all be achieved. Moreover, an enhanced reduction in oxygen consumption is made possible when air is used as a reactant in the reactor 6.

In a further alternative embodiment (not shown) of the plant illustrated in Figure 1, all the calorific gas produced in the reactor 6 is fed with the hot coal char into the top of the melter-gasifier 4. The calorific gas is thus separated from the coal char in the melter-gasifier 4 itself. This procedure offers the advantage of promoting the conversion to carbon monoxide and hydrogen of the volatiles evolved from the coal as a result of the volatiles being subjected for an appreciable residence period in the top of the melter-gasifier 4 to a temperature in the order of 1000°C.

## Claims

1. A method for producing iron, comprising the steps of reducing iron ore to iron by reaction with reducing gas in a first stage and melting the iron and gasifying a solid carbonaceous material both in a second stage, the gasification of the solid carbonaceous material yielding a reducing gas for use in the first stage, characterised in that at least 25% by weight of the carbonaceous material comprises particulate coal char formed by the partial oxidation of coal in a reactor separate from the first and second stages.

2. A method as claimed in claim 1, in which at least 75% by weight of said carbonaceous material comprises said coal char.

3. A method as claimed in claim 1 or claim 2, in which the coal char is fed hot from the reactor to the second stage.

4. A method as claimed in any one of the preceding claims, in which the coal is partially oxidised at a temperature in the range of 500 to 1000°C.

5. A method as claimed in any one of the preceding claims, in which a reducing gas from the first stage is passed to the reactor in order to moderate the temperature therein.

6. A method as claimed in any one of the preceding claims, in which an oxide or carbonate of an alkaline earth or alkali metal is introduced into the reactor so as to convert hydrogen sulphide to the corresponding alkaline earth or alkali metal sulphide.

7. A method as claimed in any one of the preceding claims, in which steam is introduced into the reactor so as to inhibit the formation of soot therein.

8. A method as claimed in any one of the preceding claims, in which pure oxygen or oxygen-enriched air or air is used as a reactant in order to effect partial oxidation of the particulate coal in the reactor.

9. A method as claimed in any one of the preceding claims, in which a calorific gas produced in the reactor is mixed at a region intermediate the first and second stages with at least part of the reducing gas formed in the second stage or is taken as a product.

10. A method as claimed in any one of the preceding claims, in which the partial oxidation of the particulate coal is performed in a fluidised bed.

11. Apparatus for producing iron, comprising a first furnace stage for reducing iron ore to iron by reaction of a reducing gas, a second furnace stage for melting the iron and gasifying a solid carbonaceous material so as to form the reducing gas, characterised in that the apparatus additionally includes a reactor separate from the first and second stages for partially oxidising particulate coal to form a coal char, and means for feeding the coal char to said second furnace stage, wherein the reactor is adapted to supply at least 25% by weight of the solid carbonaceous material to the second furnace stage.

FIG.1

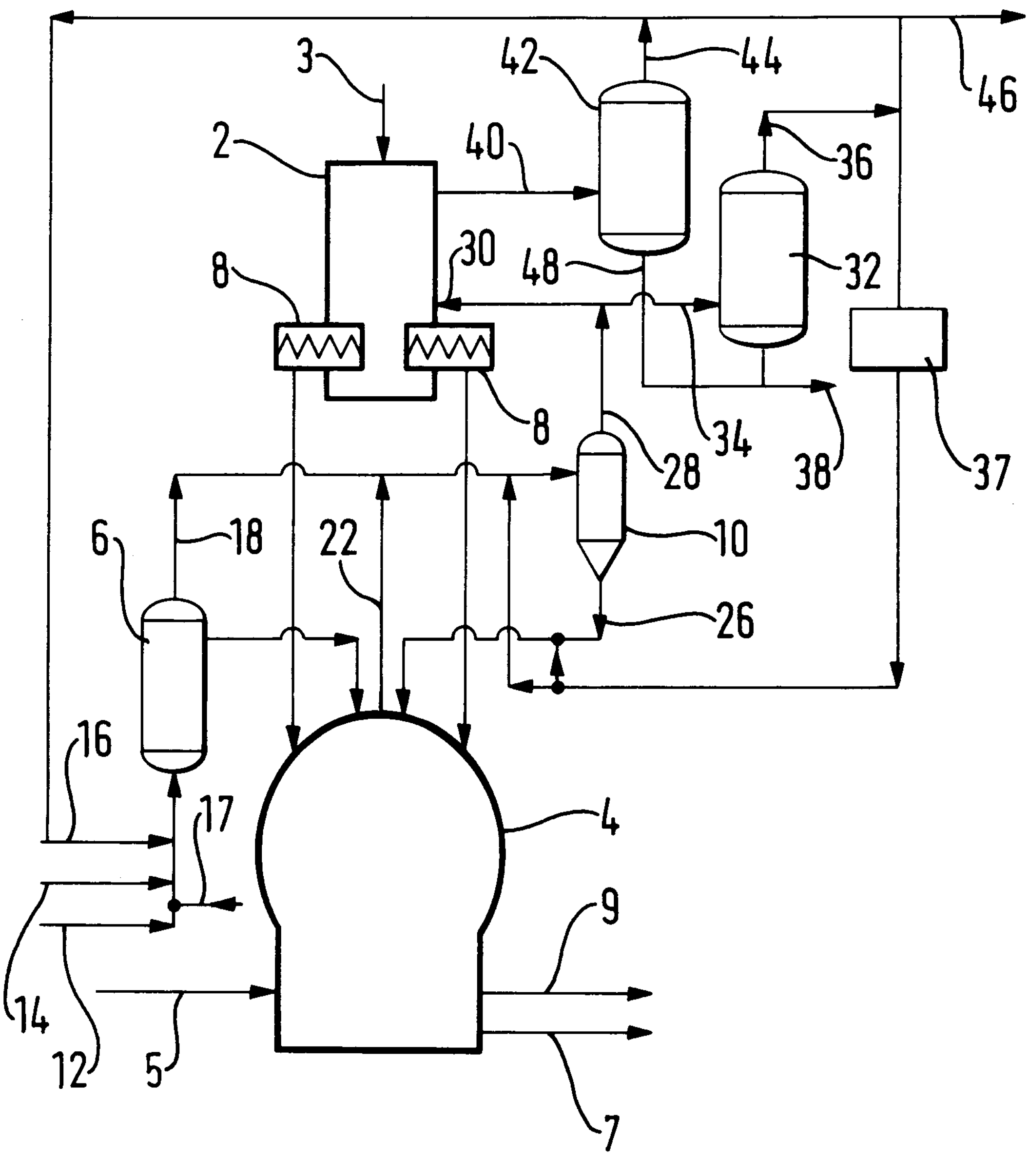

FIG. 2

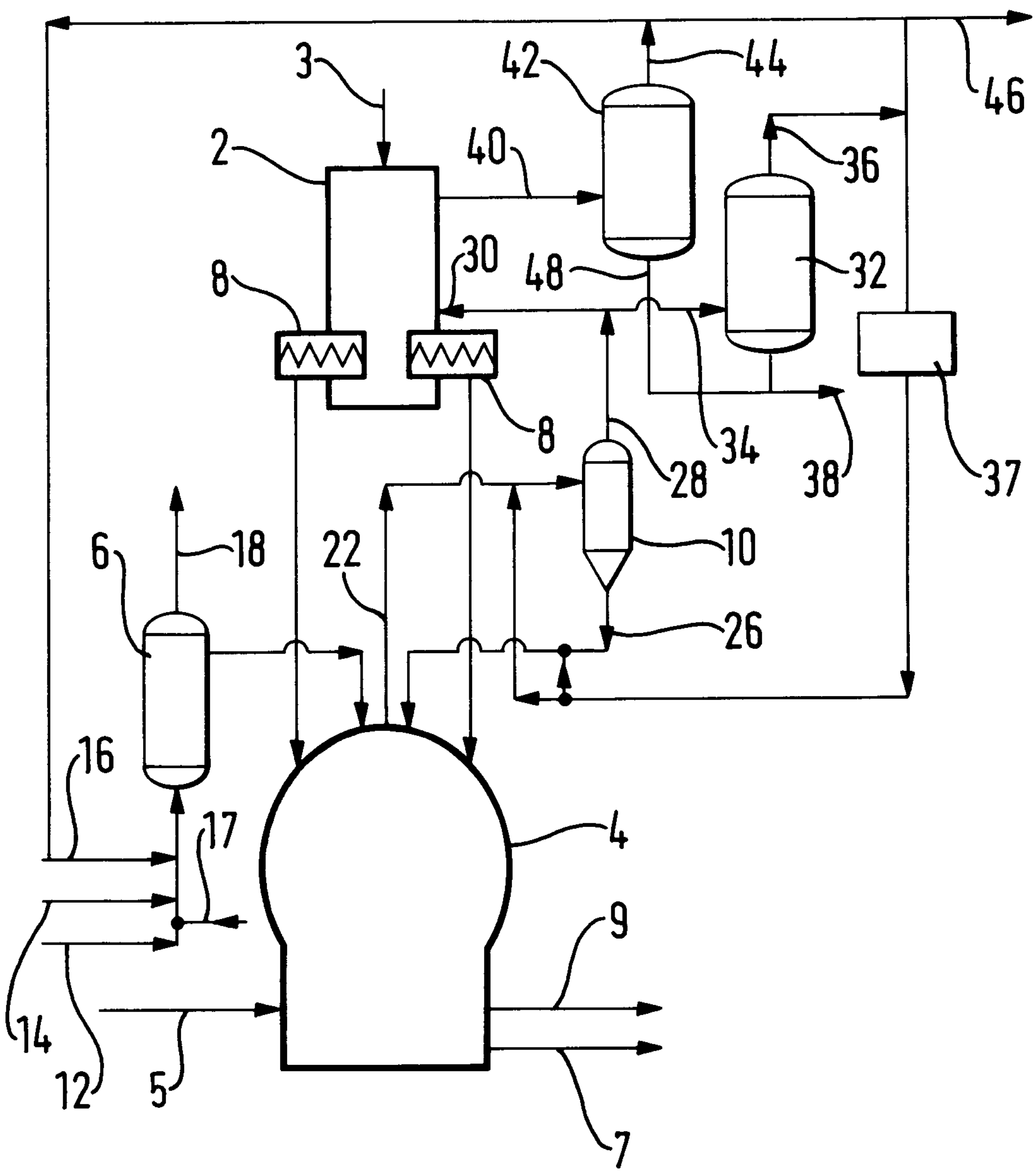

European Patent Office

# EUROPEAN SEARCH REPORT

Application Number
EP 94 30 8617

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | DE-B-11 67 368 (DEMAG-ELEKTROMETALLURGIE) * column 4, line 26 - line 54; claims 1-9; figure 1 * | 1,3,9,11 | C21B13/14 |
| X | EP-A-0 063 924 (KAWASAKI STEEL CORPORATION) * page 15, line 6 - page 20, line 21; claims 4-6; figure 3 * | 1,3,4, 9-11 | |
| X | DE-A-35 30 240 (VOEST-ALPINE) * claims 1-12; figure 1 * | 1-11 | |
| Y | WO-A-89 01981 (NORTHERN STATES POWER COMPANY) * page 15, column 29 - page 19, column 29; figures 1,2 * | 1,11 | |
| Y | WO-A-87 00554 (IPS INTERPROJECT SERVICE AB) * claims 1-11; figure 1 * | 1,11 | TECHNICAL FIELDS SEARCHED (Int.Cl.6) |
| A | GB-A-2 199 339 (KORF ENGINEERING) * claims 1-19; figure 1 * | 1-11 | C21B |

The present search report has been drawn up for all claims

| Place of search | Date of completion of the search | Examiner |
|---|---|---|
| THE HAGUE | 18 January 1995 | Elsen, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)